# DEMANDE DE BREVET EUROPEEN

(11) **EP 2 626 643 A1**
(43) Date de publication de la demande: **14.08.2013**
(21) Numéro de dépôt: 13154321.7
(22) Date de dépôt: 07.02.2013
(51) Int. Cl.: F24F 5/00, F24F 6/04

(54) **Dispositif de protection thermique d'un batiment et procede de fonctionnement d'un tel dispositif**

(30) Priorité: 07.02.2012 FR 1251114
(71) Demandeur: COMMISSARIAT A L'ENERGIE ATOMIQUE ET AUX ENERGIES ALTERNATIVES, 75015 Paris (FR)
(72) Inventeur: Claudon, Fabrice, 73000 Chambery (FR)
(74) Mandataire: Novaimo

(57) **Abrégé**

Procédé de protection thermique d'un bâtiment vis-à-vis des effets du rayonnement solaire, le bâtiment comprenant une enveloppe, le procédé comprenant une étape d'application d'un liquide, notamment d'application d'eau, au niveau d'un élément de l'enveloppe, à l'extérieur de l'enveloppe, l'étape d'application comprenant une injection du liquide dans l'épaisseur d'une couche, notamment d'une couche poreuse, de l'élément d'enveloppe.

## Description

L'invention concerne un procédé de protection thermique d'un bâtiment vis-à-vis des conditions climatiques extérieures, par exemple les effets du rayonnement solaire ou de la température extérieure. L'invention porte aussi sur un dispositif de protection thermique permettant de mettre en oeuvre un tel procédé. L'invention porte encore sur un bâtiment équipé d'un tel dispositif de protection.

Le domaine de l'invention concerne le rafraîchissement des bâtiments, notamment les habitations individuelles ou collectives mais également tertiaires.

En effet, il est connu que le rayonnement solaire appliqué à l'enveloppe de bâtiments ainsi qu'une température extérieure élevée provoquent, malgré les isolations ou autres protections, une augmentation de la température à l'intérieur du bâtiment.

Pour éviter ce problème, il existe déjà de nombreux systèmes comme les systèmes de climatisation fonctionnant avec un cycle thermodynamique qui agissent sur une distribution d'air ou d'eau. Ces systèmes sont assez compliqués et surtout chers à installer et à mettre en oeuvre. De plus, ils consomment beaucoup d'énergie.

Un autre moyen de faire du rafraichissement est d'utiliser l'énergie latente d'évaporation de l'eau. Il existe par exemple des systèmes de ventilation qui utilisent ce principe pour refroidir l'air intérieur.

En utilisant le même principe, il existe encore des systèmes de murs rafraichissants qui autorisent une circulation d'air dans leur épaisseur, circulation au cours de laquelle l'air provoque une évaporation d'eau. Il s'ensuit que l'air pénétrant dans le bâtiment est chargé en humidité. Cette humidité peut évidemment causer des problèmes de dégradation sur le long terme.

Le but de l'invention est de fournir un procédé de fonctionnement d'un dispositif de protection permettant de remédier aux problèmes évoqués précédemment et améliorant les procédés connus de l'art antérieur. En particulier, l'invention propose un procédé de fonctionnement d'un dispositif de protection permettant d'assurer une protection simple, efficace et peu consommatrice d'énergie. L'invention porte aussi sur un dispositif de protection fonctionnant conformément à un tel procédé et sur un bâtiment équipé d'un tel dispositif.

Selon l'invention, le procédé protège thermiquement un bâtiment vis-à-vis des effets du rayonnement solaire, le bâtiment comprenant une enveloppe. Le procédé comprend une étape d'application d'un liquide, notamment d'application d'eau, au niveau d'un élément de l'enveloppe, à l'extérieur de l'enveloppe.

L'étape d'application peut comprendre une injection du liquide dans l'épaisseur d'une couche, notamment d'une couche poreuse, de l'élément d'enveloppe.

Le procédé peut comprendre une étape de détection ou de mesure d'un rayonnement solaire et/ou une étape de détection ou de mesure d'une température externe au bâtiment et/ou de détection ou de mesure d'une température interne au bâtiment et/ou de détection ou de mesure d'une température d'enveloppe du bâtiment.

La quantité de liquide appliquée peut dépendre du rayonnement solaire et/ou de la température externe au bâtiment et/ou de la température interne au bâtiment et/ou de la température d'enveloppe du bâtiment détectés ou mesurés.

L'étape d'application peut comprendre une aspersion du liquide sur l'élément d'enveloppe.

Selon l'invention, le dispositif de protection thermique est destiné à protéger un bâtiment comprenant une enveloppe vis-à-vis des effets du rayonnement solaire. Il est **caractérisé en ce qu'il** comprend des éléments matériels et/ou logiciels de mise en oeuvre du procédé de protection défini précédemment.

Le dispositif peut comprendre un élément d'application d'un liquide, notamment d'application d'eau, au niveau d'un élément de l'enveloppe, à l'extérieur de l'enveloppe.

Le dispositif peut comprendre un élément de détection ou de mesure d'un rayonnement solaire et/ou un élément de détection ou de mesure d'une température externe au bâtiment et/ou un élément de détection ou de mesure d'une température interne au bâtiment et/ou un élément de détection ou de mesure d'une température d'enveloppe du bâtiment.

Le dispositif peut comprendre un élément de détermination de la quantité de liquide appliquée en fonction du rayonnement solaire et/ou de la température externe au bâtiment et/ou de la température interne au bâtiment et/ou de la température d'enveloppe du bâtiment détectés ou mesurés.

L'élément d'application du liquide peut comprendre un élément d'aspersion du liquide sur l'élément d'enveloppe.

L'élément d'application du liquide peut comprendre un élément d'injection du liquide dans l'épaisseur d'une couche, notamment une couche poreuse, de l'élément d'enveloppe.

Le dispositif peut comprendre un réservoir de stockage de liquide, notamment un réservoir de stockage d'eau, en particulier d'eau de pluie.

Le bâtiment peut comprendre un dispositif de protection défini précédemment.

Un élément de l'enveloppe du bâtiment peut comprendre une couche poreuse destinée à recevoir le liquide.

Ces objets, caractéristiques et avantages de la présente invention seront exposés en détail dans la description suivante d'un mode de réalisation particulier fait à titre non-limitatif en relation avec les figures jointes parmi lesquelles :
La figure 1 représente schématiquement un mode de réalisation d'un dispositif de protection selon l'invention.
La figure 2 représente schématiquement une première variante du mode de réalisation du dispositif de protection selon l'invention.
La figure 3 représente schématiquement en coupe une deuxième variante du mode de réalisation du dispositif de protection selon l'invention.
La figure 4 représente schématiquement en vue de face un treillis utilisé dans une deuxième variante du mode de réalisation du dispositif de protection selon l'invention.

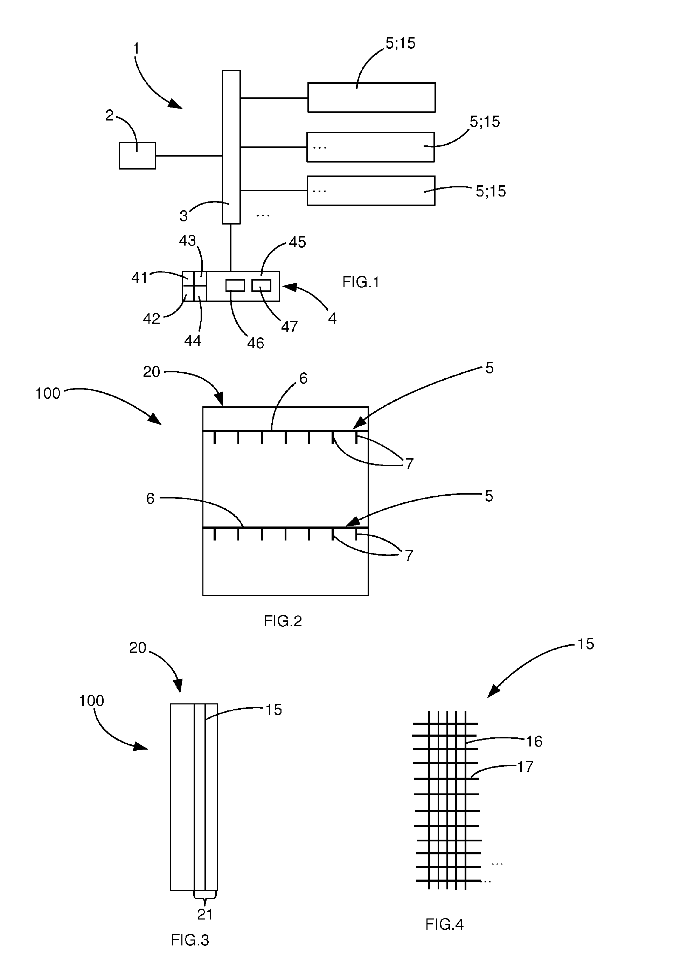

Un mode de réalisation d'un dispositif 1 de protection selon l'invention est décrit ci-après en référence aux figures 1 à 4. Le dispositif est destiné à protéger un bâtiment 100 vis-à-vis des effets du rayonnement solaire. Le bâtiment comprend une enveloppe composée de plusieurs éléments 20 d'enveloppe comme une ou plusieurs façades et/ou un ou plusieurs pans de toit.

Le dispositif comprend des éléments matériels et/ou logiciels de mise en oeuvre des étapes du procédé de protection selon l'invention qui sont décrits plus bas.

En particulier, le dispositif de protection comprend principalement un élément 5 ; 15 d'application d'un liquide, notamment d'application d'eau, au niveau d'un élément de l'enveloppe, à l'extérieur de l'enveloppe. Un tel dispositif permet de refroidir ou rafraîchir l'enveloppe du bâtiment par évaporation du liquide. Par la suite, on suppose que le liquide est de l'eau. En effet, l'eau présente sur l'élément d'enveloppe, au niveau de la paroi externe de celui-ci, tel un mur ou un toit, et soumis au rayonnement solaire ou à une certaine température, va s'évaporer. Cette évaporation se fait en consommant de l'énergie qui est fournie par le rayonnement solaire ou la température extérieure. Cette évaporation se fait directement vers l'extérieur du bâtiment. Ainsi, la vapeur d'eau n'est pas produite dans le bâtiment et elle ne transite pas non plus dans le bâtiment. Toute l'énergie utilisée pour chauffer l'eau et la vaporiser n'est pas utilisée pour chauffer le mur et permet ainsi de limiter l'échauffement à l'intérieur de l'enveloppe. Bien entendu, ceci n'est mis en oeuvre que lorsque le chauffage du bâtiment n'est pas recherché, typiquement en été (voire parfois en mi-saisons). Le phénomène utilisé peut être assimilé à la transpiration de la peau.

L'évaporation de l'eau provoque ainsi un rafraîchissement de l'enveloppe du bâtiment ou plutôt évite un chauffage excessif de cette enveloppe.

Il est à noter que le dispositif ne permet pas par contre d'obtenir des effets équivalents à ceux d'une climatisation et notamment d'atteindre des températures intérieures très basses vis-à-vis de la température extérieure, il s'agit avec le dispositif selon l'invention d'un simple rafraîchissement.

Le dispositif de protection comprend outre un élément 5 ; 15 d'application d'un liquide, un réservoir d'eau 3 et un élément de régulation 4. Le réservoir est alimenté en eau par une source, comme le réseau de distribution d'eau ou, de préférence, un système de collecte d'eau de pluie. Le réservoir permet de stocker l'eau qui est ensuite utilisée pour alimenter l'élément d'application d'eau, voire pour alimenter plusieurs éléments d'application d'eau. En effet, le dispositif comprend de préférence plusieurs éléments d'application d'eau indépendants, en particulier un élément d'application d'eau par élément d'enveloppe tel qu'un mur ou un pan de toiture. Le dispositif peut encore comprendre plusieurs éléments d'application d'eau indépendants pour un même élément d'enveloppe tel qu'un mur ou un pan de toiture, notamment pour des parties distinctes d'un même mur ou d'un même pan de toiture. L'élément de régulation permet de déterminer les paramètres de fonctionnement de l'élément d'application ou des éléments d'application, notamment l'état de fonctionnement de marche ou d'arrêt et, dans le cas de marche, le débit d'application de l'eau. Pour ce faire, l'élément de régulation pilote une ou plusieurs vannes montées entre le réservoir et le ou les éléments d'application. Si nécessaire, l'élément de régulation pilote aussi une ou plusieurs pompes montées entre le réservoir et le ou les éléments d'application.

L'élément de régulation 4 comprend également de préférence des capteurs, notamment un élément 41 de détection ou de mesure d'un rayonnement solaire (pyranomètre ou capteur intégrant une cellule photovoltaïque) et/ou un élément 42 de détection ou de mesure d'une température externe au bâtiment et/ou un élément 43 de détection ou de mesure d'une température interne au bâtiment et/ou un élément 44 de détection ou de mesure d'une température d'enveloppe du bâtiment. L'élément 44 de mesure de température du mur peut être réalisé par une ou plusieurs sondes (type PT100 ou thermocouple) de températures noyées dans un enduit. L'élément de régulation comprend encore avantageusement un calculateur 45 comprenant des éléments 46 de détermination d'ordres de commande des vannes et des éventuelles pompes. Le calculateur 45 comprend de préférence encore une mémoire 47 permettant de stocker une valeur de température désirée par les occupants du bâtiment. Les éléments 46 de détermination des ordres de commande déterminent les ordres de commande en fonction des informations fournies par les éléments de détermination ou de mesure 41, 42, 43, et 44 et par la mémoire 47. L'élément de régulation permet donc d'optimiser la consommation d'eau.

Le dispositif ne consomme que de l'eau, idéalement de l'eau de pluie. Dans ce cas, il pourra être relié à une cuve de récupération des eaux de pluie.

Le pilotage indépendant de différents éléments d'application d'eau associés à différents éléments d'enveloppe permet également d'économiser l'eau. Ainsi, on pourra se contenter par exemple de ne rafraîchir que le mur et/ou le toit exposés aux rayonnements solaires.

Dans une première variante de réalisation représentée à la figure 2, chaque élément 5 d'application d'eau comprend une conduite 6 sur laquelle sont montés plusieurs éléments 7 d'aspersion de l'élément d'enveloppe comme des buses d'aspersion. Ces éléments d'aspersion permettent d'asperger la paroi externe de l'élément d'enveloppe.

Alternativement, des injecteurs peuvent être montés sur la conduite 6 et permettre l'injection d'eau dans l'épaisseur d'une couche externe de l'élément d'enveloppe.

Dans une deuxième variante de réalisation représentée aux figures 3 et 4, chaque élément 15 d'application d'eau comprend un treillis formé de conduites d'eau, notamment des conduites verticales 16 et des conduites horizontales munies de trous par lesquels l'eau peut sortir. Ce treillis est noyé dans l'épaisseur d'une couche externe 21 de l'élément d'enveloppe, notamment une couche de matériau poreux, comme un enduit poreux. La couche poreuse pourra être réalisée avec un enduit à la chaux ou tout autre matériau ou enduit ayant une porosité forte comparable à celle de l'enduit à la chaux.

Le treillis peut aussi être disposé entre l'isolant et le mur ou à l'extérieur du mur. Le treillis recouvre de préférence l'ensemble de l'élément de l'enveloppe.

Le treillis (qui intègre des micro-canaux) pourra avoir une maille de par exemple 10 cm avec des sorties d'eau (trous ou injecteurs) à chaque intersection du treillis, c'est-à-dire, tous les 10 cm. Dans le cas d'une maison d'une centaine de mètres carrés qui a des besoins de 40 litres par jour pour son rafraîchissement par évaporation, le débit d'un injecteur sera d'environ 1 ml par heure pendant la période ou la température de la paroi est élevée.

Un dispositif de traitement de l'eau pourra être installé de façon à prévenir l'obstruction des injecteurs de distribution d'eau.

Dans les différentes variantes, le nombre de conduites ou la surface de treillis est bien sûr fonction de la taille du bâtiment.

La couche 21 n'est pas nécessairement poreuse. Il peut s'agir d'un enduit étanche à l'eau liquide mais pas à la vapeur d'eau, en général synthétique. Dans ce cas, l'injection du liquide est de préférence réalisée par goutte à goutte et non pas par pulvérisation. Dans tous les cas, les moyens d'imprégnation du liquide sont intégrés dans l'élément d'enveloppe. Par exemple, la couche 21 peut présenter une surface étanche à l'eau liquide mais pas à la vapeur d'eau.

Un mode d'exécution du procédé de protection selon l'invention est décrit ci-après.

Le procédé comprend une étape d'application d'un liquide, notamment d'application d'eau, au niveau d'un élément 20 de l'enveloppe du bâtiment 100, à l'extérieur de l'enveloppe. Il s'agit donc de projeter ou bien de laisser couler sur le toit et/ou les murs du bâtiment de l'eau en très petite quantité. Alternativement, l'eau peut être injectée dans une couche externe et poreuse de l'élément d'enveloppe.

De préférence, on met en oeuvre une étape de détection ou de mesure d'un rayonnement solaire et/ou une étape de détection ou de mesure d'une température externe au bâtiment et/ou de détection ou de mesure d'une température interne au bâtiment et/ou de détection ou de mesure d'une température d'enveloppe du bâtiment. En effet, ces informations permettent de définir le mode de fonctionnement du dispositif de protection qui permette de gérer au mieux la consommation d'eau et de ressources énergétiques. Ainsi, le procédé détermine la quantité de liquide à appliquer en fonction du rayonnement solaire et/ou de la température externe au bâtiment et/ou de la température interne au bâtiment et/ou de la température d'enveloppe du bâtiment détectés ou mesurés.

Par exemple, si la température d'une surface d'un élément d'enveloppe d'un bâtiment (ou le rayonnement incident) atteint une valeur seuil (par exemple 27°C dans le cas de la température), alors l'élément de régulation ordonne d'appliquer de l'eau au niveau de l'élément d'enveloppe. Ceci permet de limiter la hausse de la température de l'élément d'enveloppe, voire de diminuer cette température. On peut ainsi stopper ou minimiser la propagation de l'onde de chaleur dans l'enveloppe du bâtiment. Une fois que la température est descendue en dessous de la valeur seuil, alors l'élément de régulation arrête l'application d'eau. Il est tout à fait possible de prévoir deux seuils pour commander le début de l'application d'eau et l'arrêt de l'application d'eau afin de réaliser un hystérésis. Par exemple, on commande l'application d'eau à partir d'une température de 27°C et on commande l'arrêt de l'application d'eau à 25°C. Ceci permet d'éviter de brèves séquences de fonctionnement du dispositif.

Pour une maison de type Bâtiment Basse Consommation (d'une surface habitable de 100 m²), lors de journées de forte chaleur dans le Sud de la France, on peut estimer la consommation d'eau d'un dispositif de protection selon l'invention à environ 40 litres d'eau par jour. Cette estimation a été obtenue en calculant les besoins en rafraîchissement de la maison par simulation thermique dynamique. La consommation d'eau a été ensuite estimée en considérant que ces besoins en rafraîchissement sont égaux à l'énergie nécessaire pour vaporiser la quantité d'eau en question.

Le dispositif de protection et le procédé de protection selon l'invention sont bien adaptés à l'équipement de bâtiment comme à l'équipement de bâtiment ancien lors de leur rénovation. Le dispositif de protection et le procédé de protection selon l'invention sont applicables aussi bien aux bâtiments à l'isolation intérieure, qu'aux bâtiments à isolation extérieure.

Le dispositif de protection et le procédé de protection selon l'invention sont particulièrement adaptés aux maisons basse consommation ou passives qui ont de très faibles besoins en climatisation (si situées dans une zone climatique favorable).

La consommation d'énergie d'un dispositif selon l'invention est très faible et son coût de mise en oeuvre est très raisonnable.

## Revendications

1. Procédé de protection thermique d'un bâtiment (100) vis-à-vis des effets du rayonnement solaire, le bâtiment comprenant une enveloppe, le procédé comprenant une étape d'application d'un liquide, notamment d'application d'eau, au niveau d'un élément (20) de l'enveloppe, à l'extérieur de l'enveloppe, l'étape d'application comprenant une injection du liquide dans l'épaisseur d'une couche (21), notamment d'une couche poreuse, de l'élément d'enveloppe.

2. Procédé selon la revendication 1, **caractérisé en ce qu'il** comprend une étape de détection ou de mesure d'un rayonnement solaire et/ou une étape de détection ou de mesure d'une température externe au bâtiment et/ou de détection ou de mesure d'une température interne au bâtiment et/ou de détection ou de mesure d'une température d'enveloppe du bâtiment.

3. Procédé selon la revendication 2, **caractérisé en ce que** la quantité de liquide appliquée dépend du rayonnement solaire et/ou de la température externe au bâtiment et/ou de la température interne au bâtiment et/ou de la température d'enveloppe du bâtiment détectés ou mesurés.

4. Procédé selon l'une des revendications précédentes, **caractérisé en ce que** l'étape d'application comprend une aspersion du liquide sur l'élément d'enveloppe.

5. Dispositif (1) de protection thermique destiné à protéger un bâtiment (100) comprenant une enveloppe vis-à-vis des effets du rayonnement solaire, **caractérisé en ce qu'il** comprend des éléments (3, 4, 41, 42, 43, 44, 45, 46, 47, 5, 6, 7 ; 15, 16, 17) matériels et/ou logiciels de mise en oeuvre du procédé de protection selon l'une des revendications précédentes.

6. Dispositif selon la revendication précédente, **caractérisé en ce qu'il** comprend un élément (5 ; 15) d'application d'un liquide, notamment d'application d'eau, au niveau d'un élément de l'enveloppe, à l'extérieur de l'enveloppe.

7. Dispositif selon la revendication 5 ou 6, **caractérisé en ce qu'il** comprend un élément (41) de détection ou de mesure d'un rayonnement solaire et/ou un élément (42) de détection ou de mesure d'une température externe au bâtiment et/ou un élément (43) de détection ou de mesure d'une température interne au bâtiment et/ou un élément (44) de détection ou de mesure d'une température d'enveloppe du bâtiment.

8. Dispositif selon la revendication précédente, **caractérisé en ce qu'il** comprend un élément (46) de détermination de la quantité de liquide appliquée en fonction du rayonnement solaire et/ou de la température externe au bâtiment et/ou de la température interne au bâtiment et/ou de la température d'enveloppe du bâtiment détectés ou mesurés.

9. Dispositif selon l'une des revendications 7 à 8, **caractérisé en ce que** l'élément d'application du liquide comprend un élément (5) d'aspersion du liquide sur l'élément d'enveloppe.

10. Dispositif selon l'une des revendications 5 à 9, **caractérisé en ce que** l'élément d'application du liquide comprend un élément d'injection (15) du liquide dans l'épaisseur d'une couche, notamment une couche poreuse, de l'élément d'enveloppe.

11. Dispositif selon l'une des revendications 5 à 10, **caractérisé en ce qu'il** comprend un réservoir (3) de stockage de liquide, notamment un réservoir de stockage d'eau, en particulier d'eau de pluie.

12. Bâtiment (100) comprenant un dispositif de protection selon l'une des revendications 5 à 11.

13. Bâtiment selon la revendication précédente, **caractérisé en ce qu'**un élément de son enveloppe comprend une couche poreuse destinée à recevoir le liquide.
